# EUROPEAN PATENT APPLICATION

(11) **EP 1 198 981 A2**
(43) Date of publication of application: **24.04.2002**
(21) Application number: 01124680.8
(22) Date of filing: 10.10.2001
(51) Int. Cl.: A01D 34/68

(54) **Motor-driven lawn mower with improved drive clutch**

(30) Priority: 20.10.2000 IT MI002276
(71) Applicant: Ibea S.p.A., 22070 Luisago, (CO9 (IT)
(72) Inventor: Faverio, Danilo, 22070 Casnate con Bernate (CO) (IT); Zanirato, Renzo, 22073 Fino Mornasco (CO) (IT)
(74) Representative: Savi, Alberto

(57) **Abstract**

A motor-driven lawn mower provided with means suitable for connecting and disconnecting the axis carrying the driving wheels from the other driving gears wherein said means consist of a clutch comprise
- a first housing member (9) integral with the motion drive shaft (4) to the wheels, which exhibits a cam profile (10) comprising at least one inclined portion (11) continuing with a straight portion (12) parallel to the shaft axis;
- a second housing member (13) idly mounted on said shaft (4) and integral with a toothed wheel (15) connected to the drive, said second housing member (13) exhibiting a cam profile (14) comprising at least one inclined portion (23) continuing with a straight portion (24) parallel to the shaft (4) axis, said cam profile (14) of said second housing (13) facing said cam profile (10) of said first housing (9);
- means (20) suitable for being concurrently engaged by the cam profiles of said first and second housing to constrain them in rotation.

## Description

The present invention proposes a motor-driven lawn mower wherein the drive unit incorporates an improved clutch device which allows connecting and disconnecting the driving wheel shaft from the other drive members, so as to allow an easy push operation, since it is not necessary to drag the speed reduction unit in rotation.

In detail, the clutch comprises a pair of cam-profiled members, the first one integral with the wheel shaft and the second one idly mounted on said shaft and integral with a toothed wheel which receives motion from the motor, since a spring member suitable for engaging the cam profiles of said first and second member is provided to constrain them in rotation in a first direction and release them when the shaft rotates in the reverse direction.

Most motor-driven lawn mowers are not provided with reverse gear. Thus, to allow the backward motion, lawn mowers are usually provided with clutch or other devices for clutching and disengaging the driving wheels.

To avoid using expensive friction clutches, for example, motor-driven lawn mowers are used, wherein power drive from motor to driving wheels is interrupted and restored by loosening and tensioning a belt arranged between motor and reduction unit.

Typically, the belt tension is regulated by adjusting the angle of the pulley integral with the reduction unit.

Since the forward speed of a lawn mower is very low, a reduction unit with high reduction ratio must be inserted in the drive, such as to require also the use of gear pairs as "helical wheel-worm screw". If the motor is simply disconnected from the reduction unit, to manually move the lawn mower it is necessary to exert a considerable trust since, even though reduction units with high reduction ratio are reversible, they have a very low mechanical efficiency if used in the reverse direction.

To perform push operations without excessive effort, the reduction unit must be disconnected from the wheels after having disconnected the motor from the reduction unit.

The European patent no. 0.298.016, to whom reference shall be made for a general knowledge of the former technique used, presents a lawn mower with belt drive and horizontally oscillating reduction unit fitted with a disengagement device applied to each driving wheel, which can be actuated when the drive between motor and reduction unit is interrupted.

The present invention falls within this field. It proposes a motor-driven lawn mower which, in the drive unit, is provided with an improved clutch device which allows connecting and disconnecting the wheel shaft to/from the reduction unit, with a reliable and safe, low-cost and small-sized device.

Said purpose is achieved by providing the drive unit, more precisely between reduction unit and wheel-holder shaft, with a clutch consisting of a pair of opposing cam-profiled housing members, one integral with the wheel shaft and the other idly mounted on said shat and integral with a linkage which receives motion by the motor, through a member arranged between said cam profiles, suitable for making said members integral with one another when the drive between motor and reduction unit is restored, and for disconnecting said members when, after having disconnected the reduction unit from the motor, the operator performs a simple operation consisting in pushing the machine forward by a few centimetres.

The present invention shall be described in detail by way of a non-limiting example with reference to the attached drawings. In such drawings:
- Figure 1 shows a view of the clutch box in open configuration;
- Figure 2 shows a view of the reduction unit and the clutch devices;
- Figure 3 shows the section along line C-C of figure 2;
- Figure 4 shows the enlarged section of the clutch;
- Figures 5 and 6 show perspective views of the drive unit and clutch;
- Figure 7 shows the section of the clutch-drive-wheel unit in a lawn mower according to the invention;

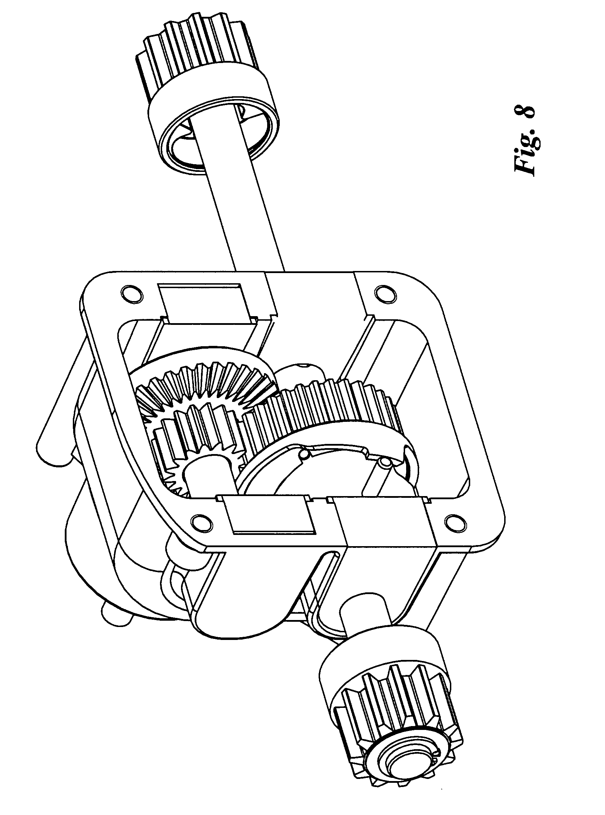

- Figure 8 shows a perspective view of a different version of the clutch-drive unit;

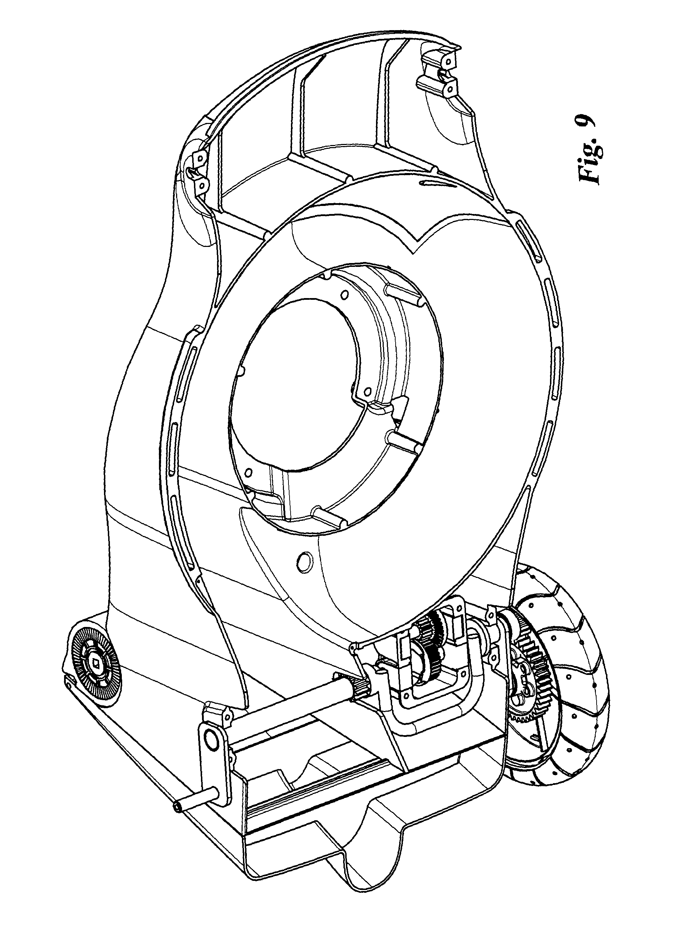

- Figure 9 shows the perspective view from below of a lawn mower according to the invention, with the clutch-drive unit of figure 8.

With reference to the attached drawings, reference number 1 globally refers to a lawn mower according to the invention, provided with driving wheels 2 on whose axis toothed wheels 3 are mounted, which receive motion by a shaft 4 connected to a drive unit 5, which in turn is connected to a motor, not shown in the figure.

The drive unit 5 incorporates the improved clutch system of the invention illustrated in detail in figures from 1 to 7.

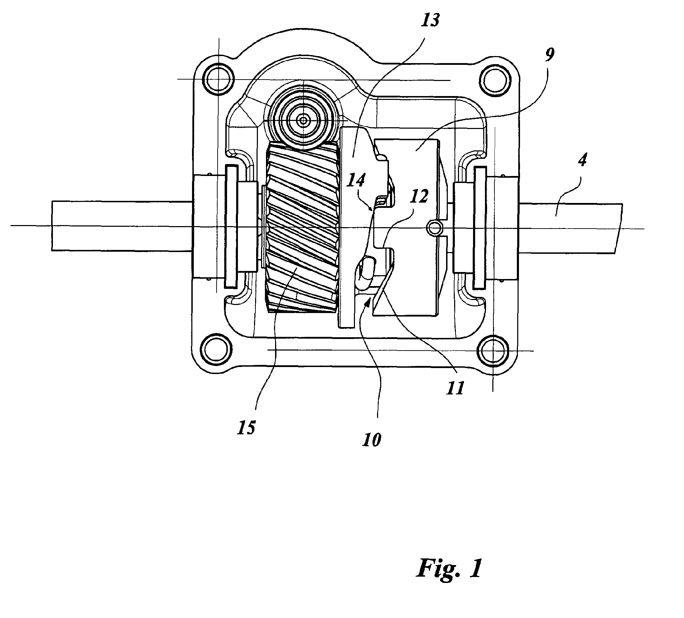

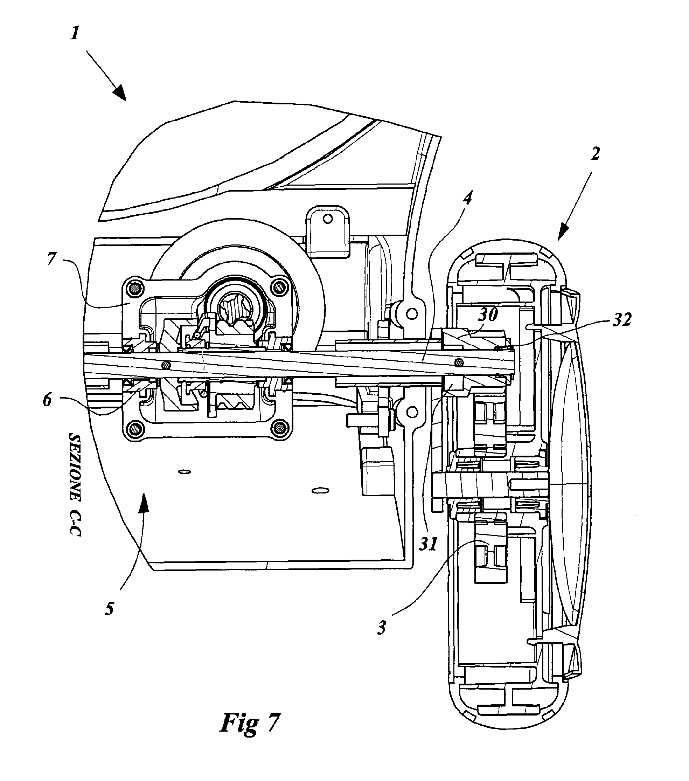

In particular, with reference to figures 1 and 7, reference number 6 indicates the supports fastened to the drive box 7 on which the drive shaft 4 is mounted.

A fixed bushing 8 and a fixed housing member 9 are mounted on shaft 4.

The housing member 9 has a cam-shaped edge 10, as it can be better seen in figures from 3 to 5.

In particular, the cam profile 10 exhibits an inclined portion 11 which continues with a portion 12 parallel to the axis of shaft 4.

A second housing member 13, opposing the first one, is mounted on bushing 8, and it has a profile with cam-shaped edge 14 with an inclined portion 25 jointed with a portion 26 parallel to the housing axis.

The housing member 13 has a larger diameter than that of housing 9, so that the cam profile 10 of housing 9 partly inserts into the cam profile 14 of housing 13.

The housing member 13 is idly mounted on bushing 8 and is integral with a toothed wheel 15 that engages with a worm screw 16 keyed on a shaft 17, which receives motion from the motor.

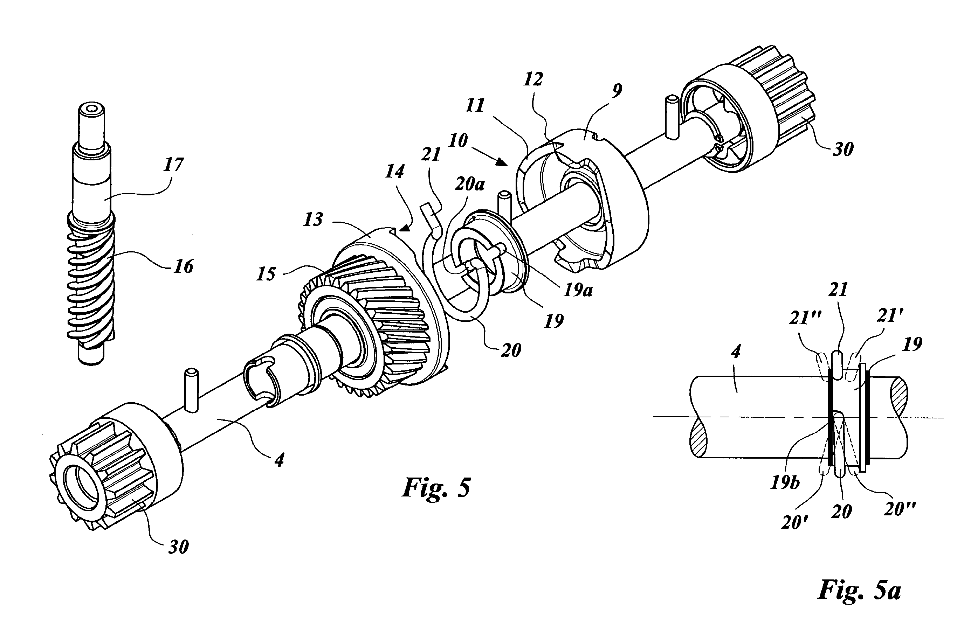

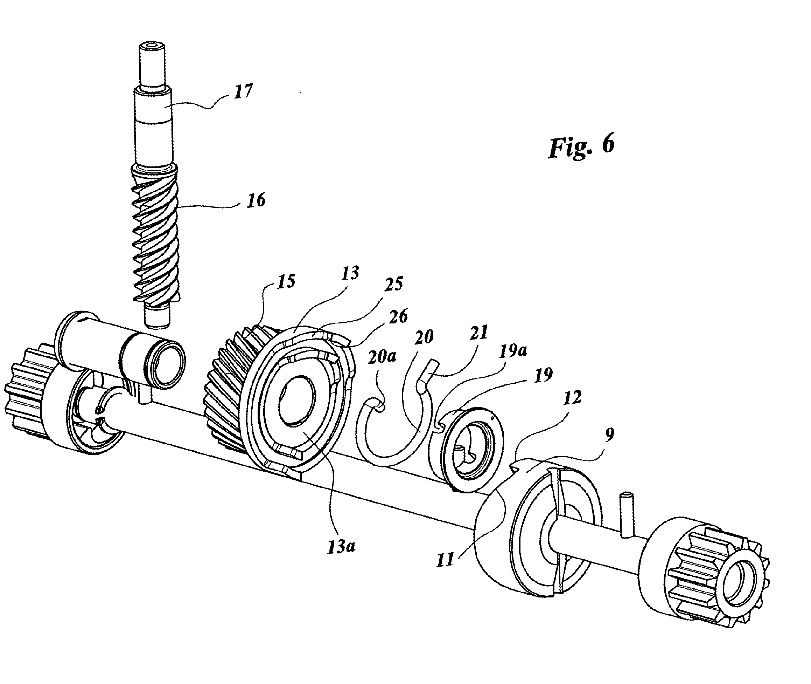

Bushing 8 is also fitted with a second bushing 19, on which a slot 19a is obtained wherein a first end 20a of an elastic member is introduced, in particular a spring member 20 whose second free end, indicated with reference number 21 in figures 5 and 6, protrudes outside of housings 9 and 13, thus engaging the cam profiles 10 and 14 of the same.

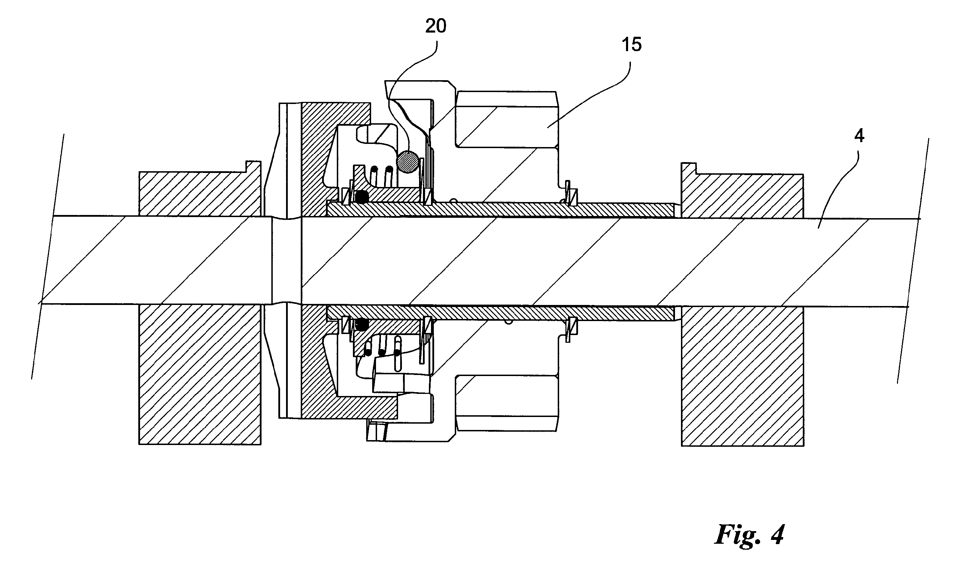

The first end 20a of member 20 remains inside slot 19a thanks to an elastic ring 19b (fig. 4) which prevents it from exiting.

In practice, as shown in fig. 5a, as member 20 rotates with its end 20a inside slot 19a around an axis perpendicular to the axis of shaft 4, it can take two extreme positions 20' and 20", to which positions 21' and 21" respectively correspond for the second end 21.

Bushing 19 is idly mounted on bushing 8 with the interposition of an O-ring 22 which has the purpose of creating a certain friction between the two bushings.

A helical or similar spring 23 is arranged between bushing 19 and the housing member 13 and tends to push end 21 of the elastic member 20, thus making it take position 21".

In said position 21", end 21 of member 20 leans against profile 14 of the housing member 13.

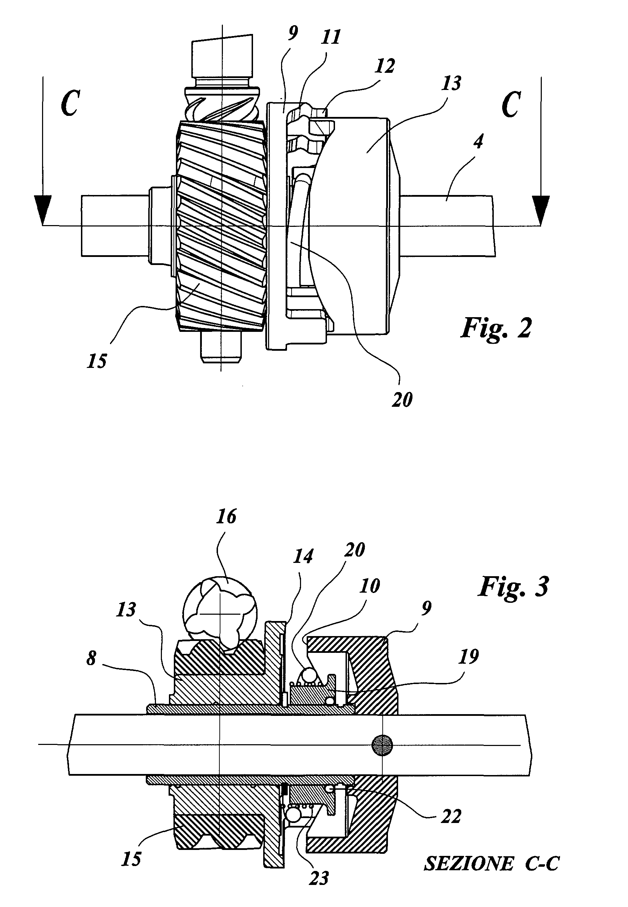

When the surface on which end 21 of member 20 rests, is against the lowest part of the cam profile 14 of housing 13, said end 21 may not interfere with the cam profile 10 of housing 9. Said situation is shown in fig. 3.

The operation is as follows.

The lawn mower motor, through the worm screw 6, makes the toothed wheel 15 rotate so that it drags the housing member 13.

During the first portion of rotation, since end 21 of member 20 is in contact with profile 14 of the housing member 13 due to the thrust of spring 23, said cam profile 14 engages said end 21 of the elastic member 20, pushing it against the cam profile of the opposing housing 9 due to the inclination of the profile portion 25.

To this purpose, O-ring 22 must be provided on bushing 19 on which spring 20 is mounted, since the O-ring provides a minimal resistance to rotation of bushing 19, which makes spring 20 rotate so that its end 21 is pushed against the profile of the opposing housing.

Without the O-ring, bushing 19 could idly rotate around shaft 4, dragged by housing 13, without end 21 of member 20 being pushed to engage the profile of housing 9.

During the first portion of rotation of housing 13, end 21 of spring 20 is engaged by the inclined portion 25 of the cam profile 14 and pushed against the corresponding inclined portion 11 of the cam profile 10 of the opposing housing 9.

When the straight portion 26 of profile 14 engages end 21 of the spring, it pushes it against the corresponding straight portion 12 of profile 10, so that the spring member 20, by interposing between the two housings, prevents their reciprocal sliding. Said situation is shown in fig. 4.

Housing 13 drags the inside housing 9, and the motion of the toothed wheel 15 is transmitted - through housing 13 - to housing 9 and hence to shaft 4 which ends at the wheels.

On the other hand, when the motor is off and the lawn mower is hand driven, the rotation of housing 9 disengages member 20 and the helical spring 23 makes member 20 rotate so that its end 21 withdraws inside housing 13, thus disengaging the two housings.

At this point, the drive remains disengaged from shaft 4, which can thus rotate freely in both directions.

By providing the lawn mower with the two toothed sprockets 30 mounted at the two ends of shaft 4 with the interposition of a free wheel device 31, of known type, with the function of favouring the steering, the external wheel is allowed to rotate faster than the internal one. In this case, when the lawn mower is pushed forward with motor off, shaft 4 is not dragged into rotation and thus, housing 9 does not rotate and release member 20.

This disadvantage is solved by inserting an O-ring 32 for each of the two sprockets 30, which has the function of creating a certain friction between shaft 4 and sprocket 30.

A simple and reliable drive clutch for a lawn mower has thus been realised, at low cost and with small size, such as to allow easy application on the machine.

A skilled technician can provide for different changes and variants, all falling within the scope of the present finding.

## Claims

1. Motor-driven lawn mower **characterised in that** it is provided with means suitable for connecting and disconnecting the axis carrying the driving wheels from the other driving gears.

2. Motor-driven lawn mower according to claim 1, wherein said means:
- disconnect the axis carrying the driving wheels from the other driving gears when, after disengaging the motor from the drive, the operator pushes the lawn mower in the running direction;
- connect the axis carrying the driving wheels to the other driving gears when the motor is clutched to the drive.

3. Motor-driven lawn mower according to claim 1, **characterised in that** said means consist of a clutch comprising:
- a first housing member (9) integral with the motion drive shaft (4) to the wheels, which exhibits a cam profile (10) comprising at least one inclined portion (11) continuing with a straight portion (12) parallel to the shaft axis;
- a second housing member (13) idly mounted on said shaft (4) and integral with a toothed wheel (15) connected to the drive, said second housing member (13) exhibiting a cam profile (14) comprising at least one inclined portion (23) continuing with a straight portion (24) parallel to the shaft (4) axis, said cam profile (14) of said second housing (13) facing said cam profile (10) of said first housing (9);
- means (20) suitable for being concurrently engaged by the cam profiles of said first and second housing to constrain them in rotation.

4. Motor-driven lawn mower according to claim 3, **characterised in that** said housing members (9, 13) are coaxial and have different diameters, so that one of said housing members (9) penetrates at least partly inside said other housing member (13), said means being suitable for constraining said housings in rotation since they consist of a spring member (20) mounted on a support (19) mounted on said shaft (4) with possibility of rotation, said spring member (20) exhibiting a protruding end (21) with respect to said housing, so as to insert between said cam profiles.

5. Motor-driven lawn mower according to claim 4, **characterised in that** said spring member (20) is mounted on a bushing (19) which is mounted with possibility of rotation on said shaft (4) inside said housings, since there are elastic means (23) suitable for moving said spring to a position where said spring disengages from the profile of at least one of said housings (9).

6. Motor-driven lawn mower according to claim 5, **characterised in that** it is provided with means (22) suitable for generating a slight friction between said bushing (19) and said shaft (4).

7. Motor-driven lawn mower according to claim 6, **characterised in that** said means (22) suitable for generating friction consist of an O-ring inserted between bushing 19 and shaft 4.

8. Motor-driven lawn mower according to the previous claims, **characterised in that** said housing (13) receives motion through a worm screw and toothed wheel linkage.

9. Motor-driven lawn mower according to claims from 1 to 7, **characterised in that** said housing (13) receives motion through a bevel gear pair.

10. Motor-driven lawn mower according to the previous claims, wherein the motion of shaft 4 is transmitted to the wheels through toothed sprockets 30 that engage toothed wheels 3 integral with wheels 2, with the interposition of free wheel devices 31, suitable for allowing an easier steering, **characterised in that** it is provided with means (32) suitable for generating a slight friction between sprockets 30 and shaft 4, during the rotation of said sprockets 30 with respect to said shaft 4 in the direction allowed by the free wheel devices 31.

11. Motor-driven lawn mower according to claim 10, **characterised in that** said means (32) suitable for generating friction consist of an O-ring inserted between sprocket 30 and shaft 4.

12. Motor-driven lawn mower as described and illustrated.
